# FASCICULE DE BREVET EUROPEEN

(11) **EP 1 204 463 B1**
(45) Date de publication et mention de la délivrance du brevet: **04.01.2006**
(21) Numéro de dépôt: 00949632.4
(22) Date de dépôt: 04.07.2000
(51) Int. Cl.: B01D 65/02, B01D 65/06, C02F 1/44

(54) **PERFECTIONNEMENTS APPORTES AU LAVAGE CHIMIQUE ET, EN PARTICULIER AU RIN AGE DES DISPOSITIFS DE SEPARATION MEMBRANAIRE DE SOLUTIONS ET DE SUSPENSION**
VERFAHREN ZUM CHEMISCHEN WASCHEN, UND INSBESONDERE ZUM SPÜLEN VON MEMBRANVORRICHTUNGEN ZUM TRENNEN VON LÖSUNGEN UND SUSPENSIONEN
IMPROVEMENTS TO CHEMICAL WASHING AND, PARTICULARLY TO RINSING OF SEPARATING MEMBRANE DEVICES FOR SOLUTIONS AND SUSPENSION

(30) Priorité: 30.07.1999 FR 9909955
(43) Date de publication de la demande: 15.05.2002
(73) Titulaire: ONDEO DEGREMONT, 92500 Rueil-Malmaison (FR)
(72) Inventeur: MOULART, Pierre, F-92500 Rueil Malmaison (FR)
(74) Mandataire: Peaucelle, Chantal
(86) Numéro de dépôt international: PCT/FR2000/001917
(87) Numéro de publication internationale: WO 2001/008791

(56) Documents cités:
- US-A- 5 393 433
- RIPPERGER S.: "Mikrofiltration mit Membranen. Grundlagen, Verfahren, Anwendungen" 1994 , VCH VERLAG , WEINHEIM, DE XP002137960 205920 ISBN: 3-527-28457-5 page 249, alinéa 1 figures 7-1,7-3 page 255, dernier alinéa page 256, alinéa 3 page 257, dernier alinéa -page 259, alinéa 3
- PATENT ABSTRACTS OF JAPAN vol. 1999, no. 05, 31 mai 1999 (1999-05-31) -& JP 11 028339 A (NGK INSULATORS LTD), 2 février 1999 (1999-02-02) -& DATABASE WPI Section Ch, Derwent Publications Ltd., London, GB; Class D15, AN 1999-174580 XP002137961
- PATENT ABSTRACTS OF JAPAN vol. 1999, no. 04, 30 avril 1999 (1999-04-30) -& JP 11 009970 A (JAPAN ORGANO CO LTD), 19 janvier 1999 (1999-01-19) -& DATABASE WPI Section Ch, Derwent Publications Ltd., London, GB; Class D15, AN 1999-146501 XP002137962
- PATENT ABSTRACTS OF JAPAN vol. 017, no. 388 (C-1086), 21 juillet 1993 (1993-07-21) -& JP 05 068965 A (TOSHIBA CORP), 23 mars 1993 (1993-03-23) -& DATABASE WPI Section Ch, Derwent Publications Ltd., London, GB; Class D15, AN 1993-130769 XP002137963

## Description

La présente invention concerne des perfectionnements apportés au lavage chimique et, en particulier, au rinçage de dispositifs membranaires de séparation de solutions et de suspensions, tels que des filtres pour liquides contenant des matières en suspension, ces filtres comportant des éléments filtrants constitués de membranes par exemple de microfiltration ou d'ultrafiltration, qui doivent être décolmatées ou lavées périodiquement lorsqu'elles ont perdu leurs caractéristiques de capacité à filtrer l'eau. Ces décolmatages ou lavages peuvent être effectués sous la forme d'un nettoyage chimique.

Dans ce but, dans la technique actuelle, on utilise divers produits tels que des solutions d'acide organique (par exemple acide citrique ou acide oxalique) ou d'acide minéral, des bases (soude, ammoniaque), des oxydants (solution chlorée, eau oxygénée, eau ozonée) et également des détergents éventuellement en combinaison avec des agents complexants (chelates, gluconates).

Les membranes organiques de filtration sont constituées de matériaux très divers. Certains de ces matériaux ne résistent pas aux oxydants, d'autres sont détruits par des pH trop bas ou trop élevés et, les fabricants de membranes recommandent une sélection de produits spécifiques adaptés à chaque type de membrane.

Dans le cas de membranes constituées d'acétate de cellulose, étant donné que ce matériau ne supporte pas les pH élevés, supérieurs à 8;5, la technique généralement utilisée consiste à lessiver la membrane à l'aide de produits à base de détergents dont le pH doit être ajusté à pH 8.

Même pour des membranes qui sont lavables à l'aide de solutions basiques, l'usage occasionnel de détergents n'est jamais exclu car il constitue souvent la solution ultime en cas de colmatage ou d'encrassement sévère des membranes.

L'utilisation de détergents pose un certain nombre de problèmes, le plus important étant que le lessivage mettant en oeuvre des détergents nécessite ensuite un rinçage final exigeant des volumes d'eau importants. En effet, il est nécessaire de faire passer des quantités notables d'eau de rinçage au travers de la membrane afin d'amener la concentration résiduelle en détergents sous la limite dite CMA (Concentration Maximale Admissible dans l'eau destinée à la consommation humaine) de 0,2 mg/l découlant de l'application sur le territoire national d'une directive de la CEE. A titre d'exemple, avec une membrane « AQUASOURCE » réalisée par la présente titulaire et constituée de matériaux dérivés de l'acétate de cellulose, il faut compter globalement un volume total d'effluents de rinçage de l'ordre de 200 litres par m² de membrane dans le cas d'un lavage simple avec un seul produit détergent. Le volume d'effluents de rinçage est évidemment bien supérieur dès qu'il est nécessaire de mettre en oeuvre des lavages répétitifs ou d'utiliser simultanément plusieurs réactifs et détergents.

Le document RIPPERGER S. : 'Mikrofiltration mit Membranen. Grundlagen, Verfahren, Anwendungen' 1994, VCH VERLAG, WEINHEIM, DE XP002137960 205920 ISBN: 3-527-28457-5, divulgue un procédé de lavage chimique (utilisant par exemple des détergents) de dispositifs membranaires de séparations comprenant une étape de rinçage effectuée par passage d'eau pour éliminer l'agent de lavage (détergent) aussi complètement que possible de l'équipement.

Le document Patent Abstracts of Japan vol. 017, no. 388 (C-1086), 21.07.1983, correspondant au JP 05 068 965 A, décrit un procédé pour éliminer des détergents des eaux usées par addition de charbon actif en poudre (CAP) et filtration sur membranes.

Le document US 5 393 433 A décrit un procédé de traitement d'un fluide contenant des matières en suspension et/ou en solution, par utilisation de membranes de separation, procédé dans lequel on ajoute au fluide à traiter un adjuvant d'alimentation (CAP) et on ajoute au fluide de rétrolavage des membranes un adjuvant de rétrolavage (Cl₂) pouvant être neutralisé par l'adjuvant d'alimentation (CAP). On ménage au rejet de rétrolavage un temps de contact suffisant pour que cette neutralisation (adsorption) de l'adjuvant de rétrolavage (Cl₂) se fasse dans ledit rejet.

Par ailleurs, il convient de toute façon de respecter la CMA de 0,2 mg/litre de détergents avant de pouvoir, après un lavage chimique, rétablir la production et raccorder les installations membranaires à un réseau de distribution d'eau potable. Enfin, le rejet en milieu naturel d'effluents de lavage ou de rinçage contenant des concentrations de détergents voisines de 1 mg/litre peut induire des phénomènes d'apparition de mousses à la surface du milieu récepteur (rivières, lacs, etc...) ce qui évidemment n'est ni autorisé, ni même admissible.

Pour cette raison, dans les stations mettant en oeuvre des membranes lavées à l'aide de solutions détergents et ne disposant pas d'un rejet dans un réseau d'égouts, il est nécessaire de prévoir un stockage des eaux de rinçage, ces dernières devant être ensuite traitées avant rejet dans les milieux naturels. Compte - tenu de l'importance du volume d'eau à traiter, cette solution devient très lourde pour les grandes installations aussi bien en termes de coût de construction que de frais d'exploitation.

Or, sur les 200 litres d'effluents mentionnés ci-dessus, on constate que les 20 premiers litres doivent impérativement être traités en station d'épuration, car la Demande Chimique en Oxygène (DCO) est supérieure à 90 mg/l. Par contre, les 180 litres restants sont relativement peu pollués car ils correspondent au volume nécessaire pour abaisser le résiduel de détergents sous le seuil de 0,2 mg/l. exigé par la règlementation. Le problème que se propose de résoudre la présente invention est d'apporter un procédé permettant de traiter localement (et en utilisant les fonctionnalités de l'équipement de filtration sur membranes lui même) cette faible pollution., c'est-à-dire plus de 80% des effluents résultant des lavages des membranes par des solutions de détergents.

En conséquence, la présente invention a pour objet un procédé de lavage chimique de dispositifs membranaires de filtration de solutions et suspensions, comprenant une étape de rinçage selon lequel les membranes subissent un lavage en utilisant des détergents adsorbables sur charbon actif, le rinçage final pour l'élimination des détergents étant effectué par passage d'eau au travers de la membrane jusqu'à amener la concentration résiduelle de détergents sous la limite de concentration maximale admissible dans les eaux destinées à la consommation humaine, ce procédé étant caractérisé en ce que
- on soutire, pour traitement spécifique extérieur au dispositif, une première partie de l'eau de rinçage de l'ordre de 10 à 20% du volume total de l'eau nécessaire au rinçage final ;
- on introduit du charbon actif en poudre dans la boucle de recirculation de l'équipement de filtration membranaire lui-même
- on fait recirculer le volume contenu dans ladite boucle de recirculation, additionné de charbon actif en poudre, au travers de la membrane avec retour du perméat dans l'enceinte dans laquelle est stockée l'eau de lavage ou de rinçage, et à partir de laquelle s'effectue ladite recirculation,
- cette recirculation étant effectuée jusqu'à atteindre un équilibre d'adsorption par le charbon actif en poudre.

Selon un mode de mise en oeuvre de la présente invention, la dose de charbon actif en poudre introduite dans la boucle de recirculation est de l'ordre de 1 g/litre de volume d'eau contenu dans l'équipement.

Selon un mode de mise en oeuvre de l'invention, on effectue une recirculation continue du volume restant d'eau de rinçage additionné de charbon actif pendant une durée comprise entre 20 et 120 minutes.

Selon l'invention, on effectue plusieurs recirculationsdu volume restant d'eau de rinçage additionné de charbon actif.

Selon la présente invention, avant remise en service de l'installation et après avoir obtenu une concentration en carbone organique total et en détergents inférieure à la limite de concentration maximale admissible, on effectue une vidange du dispositif, suivie d'un remplissage et d'un retrolavage

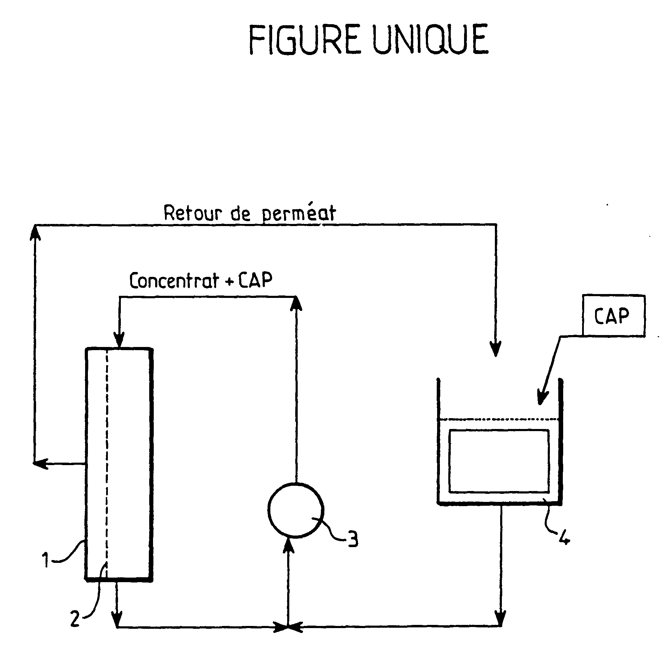

D'autres caractéristiques et avantages de la présente invention ressortiront de la description faite ci-après en référence à la figure unique du dessin annexé qui est une représentation schématique des perfectionnements apportés par l'invention.

Sur cette figure unique, on a représenté de façon schématique en 1 une cellule de filtration avec sa membrane 2, en 4 l'enceinte dans laquelle est stockée l'eau de lavage ou de rinçage et en 3, la pompe assurant la recirculation des solutions et liquides de lavage et de rinçage dans la boucle représentée sur cette figure.

Ainsi qu'on l'a mentionné ci-dessus, le procédé objet de l'invention comporte en tant que première étape, une élimination de l'eau de rinçage la plus polluée, soit environ les vingt premiers litres d'effluents par m² de membranes dont la DCO est supérieure à 90 mg/litre, c'est-à-dire une proportion de l'ordre de 10 à 20% du volume d'eau total (200 litres par m² de membrane) nécessaire au rinçage de la membrane après traitement aux détergents pour amener la concentration résiduelle de détergents sous la limite CMA.

Cette première étape d'élimination peut être effectuée par exemple par un rinçage simple par alimentation en eau brute, ou par une vidange du dispositif suivie d'un remplissage en eau brute et d'un rétrolavage.

Selon l'invention, on introduit ensuite une dose de charbon actif en poudre (CAP), dans la boucle de recirculation et l'on fait recirculer la solution eau de lavage-CAP, à l'aide de la pompe de recirculation 3, avec retour du perméat sur le bac de stockage 4. La dose de charbon actif en poudre introduite est de l'ordre de 1 gramme par litre de volume d'eau contenu dans l'équipement de filtration membranaire.

Grâce à cette technique, une proportion de l'ordre de 60 à 90% du charbon actif en poudre se dépose sur la surface de la membrane 2, le reste étant maintenu en suspension dans l'eau qui recircule côté concentrat, une partie de l'eau passe à travers le gâteau de charbon actif en poudre déposé sur la surface de la membrane et au travers de cette dernière, en entraînant le résiduel de COT (Carbone Organique Total) et de détergents côté perméat, et ramenant ce résiduel côté concentrat où il est remis au contact du charbon actif en poudre qui l'adsorbe.

L'équilibre d'adsorption est atteint après environ une heure de recirculation. On peut alors, selon l'invention, répéter l'opération : vidange du dispositif, remplissage en eau brute, rétro-lavage, introduction d'une nouvelle dose de charbon actif en poudre et nouvelle recirculation. A la fin de cette seconde recirculation, on obtient une concentration en COT et détergents qui est très proche de la limite CMA. On effectue alors une nouvelle vidange suivie d'un remplissage et d'un rétrolavage et le dispositif peut être remis en production à moins qu'il ne soit nécessaire, si le seuil de détergents n'est pas tout à fait atteint, d'effectuer un rinçage final avec rejet en milieu naturel sans risque de moussage.

Les essais effectués par la présente titulaire ont démontré que grâce à l'invention, il était possible de réduire le volume des effluents à environ 50 litres par m² de membrane, ce qui constitue un progrès considérable.

## Revendications

1. Procédé de lavage chimique de dispositifs membranaires de filtration (1) de solutions et de suspensions comprenant une étape de rinçage, selon lequel les membranes subissent un lavage en utilisant des détergents adsorbables sur charbon actif, le rinçage final pour l'élimination des détergents étant effectué par passage d'eau au travers de la membrane (2) jusqu'à amener la concentration résiduelle de détergents sous la limite de concentration maximale admissible dans les eaux destinées à la consommation humaine, **caractérisé en ce que** :
- on soutire, pour traitement spécifique extérieur au dispositif, une première partie de l'eau de rinçage de l'ordre de 10 à 20 % du volume total de l'eau nécessaire au rinçage final ;
- on introduit du charbon actif en poudre dans la boucle de recirculation de l'équipement de filtration membranaire lui-même ;
- on fait recirculer le volume contenu dans ladit boucle de recirculation additionné de charbon actif en poudre au travers de la membrane (2), avec retour du perméat dans l'enceinte (4) dans laquelle est stockée l'eau de lavage ou de rinçage et à partir de laquelle s'effectue ladite recirculation,
- cette recirculation étant effectuée jusqu'à atteindre un équilibre d'adsorption par le charbon actif en poudre.

2. Procédé de lavage chimique selon la revendication 1 **caractérisé en ce que** la dose de charbon actif en poudre introduite dans la boucle de recirculation est de l'ordre de 1 gramme par litre de volume d'eau contenu dans l'équipement.

3. Procédé de lavage chimique selon l'une des revendications 1 ou 2 **caractérisé en ce que** la première étape d'élimination est effectuée par un rinçage par alimentation en eau brute.

4. Procédé de lavage chimique selon l'une des revendications 1 ou 2 **caractérisé en ce que** la première étape d'élimination est effectuée par une vidange du dispositif suivie d'un remplissage en eau brute et d'un retrolavage.

5. Procédé de lavage chimique selon l'une quelconque des revendications précédentes **caractérisé en ce que** on effectue une recirculation continue du volume restant d'eau de rinçage additionné de charbon actif pendant une durée de l'ordre de 20 à 120 minutes.

6. Procédé de lavage chimique selon l'une quelconque des revendications précédentes **caractérisé en ce que** l'on effectue plusieurs recirculations continues du volume restant d'eau de rinçage additionné de charbon actif.

7. Procédé de lavage chimique selon l'une quelconque des revendications précédentes **caractérisé en ce que** avant remise en service du dispositif et après avoir obtenu une concentration en carbone organique total et en détergents inférieure à la limite de concentration maximale admissible, on effectue une vidange du dispositif, suivie d'un remplissage et d'un retrolavage.

## Patentansprüche

1. Verfahren zum chemischen Waschen von Membranvorrichtungen zur Filterung (1) von Lösungen und Suspensionen, mit einem Spülschritt, in dem die Membranen einem Reinigungsvorgang mittels von Aktivkohle absorbierbarer Detergentien unterzogen werden, wobei die End-Spülung zur Beseitigung der Detergentien durchgeführt wird, indem Wasser durch die Membran (2) geleitet wird, bis die Rest-Konzentration der Detergentien unter den maximal zulässigen Grenzwert der Konzentration in für den menschlichen Genuss vorgesehenem Wasser gelangt, **dadurch gekennzeichnet, dass**
- zur speziellen Behandlung außerhalb der Vorrichtung ein erster Teil des Spülwassers in der Größenordnung von 10 bis 20 GesamtVolumen-% aus dem zur End-Spülung benötigten Wasser entnommen wird;
- Aktivkohle in Pulverform in den Kreislauf des Membran-Filtersystems selbst eingeführt wird;
- das in dem Kreislauf enthaltene Volumen zusammen mit der zugegebenen pulverförmigen Aktivkohle durch die Membran (2) hindurch zirkulierend bewegt wird und das Permeat in das Behältnis zurückgeführt wird, in dem das Wasch- oder Spülwasser bevorratet ist und von dem ausgehend der Umlaufvorgang durchgeführt wird,
- wobei dieser Umlaufvorgang durchgeführt wird, bis eine gleichförmige Adsorption durch die pulverförmige Aktivkohle erreicht worden ist.

2. Verfahren zum chemischen Waschen nach Anspruch 1, **dadurch gekennzeichnet, dass** die in den Kreislauf eingegebene Dosis der pulverförmigen Aktivkohle in der Größenordnung von 1 Gramm pro Liter des in dem System enthaltenen Wasser-Volumens beträgt.

3. Verfahren zum chemischen Waschen nach Anspruch 1 oder 2, **dadurch gekennzeichnet, dass** der erste Beseitigungs-Schritt mittels einer aus Rohwasser gespeisten Spülung durchgeführt wird.

4. Verfahren zum chemischen Waschen nach Anspruch 1 oder 2, **dadurch gekennzeichnet, dass** der erste Beseitigungs-Schritt mittels Entleerung der Vorrichtung und anschließender Wiederauffüllung mit Rohwasser und einer Rückwärts-Waschung durchgeführt wird.

5. Verfahren zum chemischen Waschen nach einem der vorhergehenden Ansprüche, **dadurch gekennzeichnet, dass** über eine Dauer in der Größenordnung von 20 bis 120 Minuten eine kontinuierlicher Umlauf des Restvolumens des Spülwassers mit der zugegebenen Aktivkohle durchgeführt wird.

6. Verfahren zum chemischen Waschen nach einem der vorhergehenden Ansprüche, **dadurch gekennzeichnet, dass** mehrere kontinuierliche Umläufe des Restvolumens des Spülwassers mit der zugegebenen Aktivkohle durchgeführt werden.

7. Verfahren zum chemischen Waschen nach einem der vorhergehenden Ansprüche, **dadurch gekennzeichnet, dass** vor der erneuten Inbetriebnahme der Vorrichtung und nach dem Erreichen einer Gesamt-Konzentration an organischem Kohlenstoff und an Detergentien, die unter dem maximal zulässigen Grenzwert der Konzentration liegt, eine Entleerung der Vorrichtung und anschließend eine Wiederauffüllung und eine Rückwärts-Waschung durchgeführt werden.

## Claims

1. Process for the chemical cleaning of membrane devices for filtering (1) solutions and suspensions comprising a rinsing stage, in which the membranes undergo washing using detergents adsorbable on activated carbon, the final rinsing for the elimination of the detergents being effected by passing water through the membrane (2) until the residual concentration of detergents is brought below the limit of the maximum admissible concentration for water intended for human consumption, **characterised in that**
- for specific treatment external to the device a first part of the rinsing water, in the order of 10 to 20 % of the total volume of water necessary for the final rinsing, is drawn off;
- the powdered activated carbon is introduced into the recycling loop of the equipment for membrane filtration itself;
- the volume contained in said recycling loop with added powdered activated carbon is recycled through the membrane (2) with the permeate being returned into the chamber (4), in which the washing or rinsing water is stored and from which said recycling is carried out,
- said recycling being performed until the powdered activated carbon reaches adsorption equilibrium.

2. Process for chemical cleaning according to claim 1, **characterised in that** the dose of powdered activated carbon introduced into the recycling loop is in the order of 1 gram per litre of the volume of water contained in the equipment.

3. Process for chemical cleaning according to one of claims 1 or 2, **characterised in that** the first stage of elimination is effected by rinsing by feeding in untreated water.

4. Process for chemical cleaning according to one of claims 1 or 2, **characterised in that** the first stage of elimination is effected by evacuation of the device followed by refilling with untreated water and retrowashing

5. Process for chemical cleaning according to any one of the preceding claims, **characterised in that** there is a continual recycling of the remaining volume of rinsing water with activated carbon added during a period of in the order of 20 to 120 minutes.

6. Process for chemical cleaning according to any one of the preceding claims, **characterised in that** several recycling circuits are carried out of the remaining volume of rinsing water with activated carbon added.

7. Process for chemical cleaning according to any one of the preceding claims, **characterised in that** before putting the device back into service and after having obtained a total concentration of organic carbon and detergents lower than the maximum limit of admissible concentration there is a evacuation of the device followed by refilling and retrowashing.
